# EUROPÄISCHE PATENTANMELDUNG

(11) **EP 3 503 352 A1**
(43) Veröffentlichungstag der Anmeldung: **26.06.2019**
(21) Anmeldenummer: 18210316.8
(22) Anmeldetag: 05.12.2018
(51) Int. Cl.: H02K 3/28, H02K 3/52

(54) **STATOR EINES DREIPHASIGEN ELEKTRONISCH KOMMUTIERTEN GLEICHSTROMMOTORS**

(30) Priorität: 21.12.2017 DE 102017223519
(71) Anmelder: Bühler Motor GmbH, 90459 Nürnberg (DE)
(72) Erfinder: AHRENS, Matthias, 90455 Nürnberg (DE); BERNREUTHER, Georg, 90449 Nürnberg (DE)

(57) **Zusammenfassung**

Die Erfindung betrifft einen Stator (1) eines dreiphasigen elektronisch kommutierten Gleichstrommotors, mit einem Statorkern (2), einem Isolierstoffkörper (5) und einem Wicklungsdraht (6), wobei der Statorkern (2) einen geschlossenen Rückschlussring (3) und eine Mehrzahl von radial vom Rückschlussring (3) nach innen weisende Statorpole (4) aufweist, der Isolierstoffkörper (5) axial an den Statorkern (2) anschließt und sowohl den Rückschlussring (3) als auch die Statorpole (4) bedeckt. Aufgabe der Erfindung ist es einen Stator für einen bürstenlosen Gleichstrommotor so zu gestalten, dass er für ein 48V-Bordnetz ausgelegt ist und dabei besonders kompakt gestaltet ist und dennoch eine Berührung von Wicklungsdrähten unterschiedlicher Phasen sicher vermeidbar ist und ein wirtschaftliches Herstellungsverfahren zum Einsatz kommt. Diese Aufgabe wird erfindungsgemäß durch die Merkmale des Anspruchs 1 gelöst.

## Beschreibung

Die Erfindung betrifft einen Stator (1) eines dreiphasigen elektronisch kommutierten Gleichstrommotors, mit einem Statorkern (2), einem Isolierstoffkörper (5) und einem Wicklungsdraht (6), wobei der Statorkern (2) einen geschlossenen Rückschlussring (3) und eine Mehrzahl von radial vom Rückschlussring (3) nach innen weisende Statorpole (4) aufweist, der Isolierstoffkörper (5) axial an den Statorkern (2) anschließt und sowohl den Rückschlussring (3) als auch die Statorpole (4) bedeckt.

Ein wichtiger Anwendungsfall für solche Statoren sind bürstenlose Gleichstrommotoren für Kraftfahrzeuge mit Zweispannungsbordnetz. Bei vielen Anwendungen genügen die üblichen 12V als Versorgungsspannung. Durch die Zunahme von Verbrauchern mit erhöhtem Energiebedarf, wie Hauptkühlwasserpumpen, wird es künftig unverzichtbar sein ein Bordnetz mit höherem Spannungsniveau einzuführen. Voraussichtlich wird sich ein 48V-Bordnetz parallel zum bestehenden 12V-Bordnetz durchsetzen. Grundsätzlich bewirkt die höhere Spannung für die einzelnen Verbraucher eine geringere Stromaufnahme. Bei Elektromotoren lassen sich hierdurch geringere Wicklungsdrähte mit geringerem Drahtdurchmesser einsetzen. Diese weisen eine verhältnismäßig dünne Isolierschicht auf. Durch Fehlerstellen in der Lackisolierung oder durch Abrieb aufgrund von Mikroschwingungen kann es zu Kurzschlüssen zwischen Wicklungsdrähten unterschiedlicher Phasen und damit unterschiedlichen Spannungspotentialen kommen. Dies hätte einen Ausfall des betroffenen Elektromotors zur Folge.

Die vorliegende Erfindung zielt insbesondere auf dreiphasige Innenläufermotoren ab, die mit einem Nadelwickelverfahren bewickelt sind, insbesondere auf bürstenlose Gleichstrommotoren mit einem Durchmesser von ca. 40 bis 80mm und einem Leistungsbereich zwischen ca. 300W bis ca. 2kW. Beim Bewickeln der Statoren ist es vorteilhaft, wenn der komplette Stator mit einem einzigen Wicklungsdraht kontinuierlich ohne Unterbrechung bewickelbar ist. Bei der Drahtverlegung am Stator werden dabei in der Regel bis zu vier Drähte parallel verlegt. Auch Drahtkreuzungen sind bei kompaktem Aufbau nicht zu vermeiden. Daher besteht das Risiko von Berührungen und damit von Kurzschlüssen.

Aufgabe der Erfindung ist es einen Stator für einen bürstenlosen Gleichstrommotor so zu gestalten, dass er für ein 48V-Bordnetz ausgelegt ist und dabei besonders kompakt gestaltet ist und dennoch eine Berührung von Wicklungsdrähten unterschiedlicher Phasen sicher vermeidbar ist und ein wirtschaftliches Herstellungsverfahren zum Einsatz kommt.

Diese Aufgabe wird erfindungsgemäß durch die Merkmale des Anspruchs 1 gelöst. Um für definierte Verhältnisse und geringstmögliche Bewegungen der Wicklungsdrähte sowohl in den Statorspulen als auch in den Verbindungsleitungen zwischen den Spulen und zwischen den Phasen zu sorgen ist auf einen ausreichenden Drahtzug zu achten. Hierfür spielt auch die Geometrie des Isolierstoffkörpers eine wesentliche Rolle. Bei um eine Kreisbahn verlegte Verbindungsdrähte ist es relativ einfach stets eine spielfreie Drahtverlegung zu erreichen, daher ist es vorgesehen Phasendrahtabschnitte in Drahtführungskonturen, die entlang einer Kreisform verlaufen zu verlegen. Dabei sollen die Drahtführungskonturen derart gestaltet sein, dass keine Berührungen zwischen parallel um einen ringförmigen Drahtführungsbereich verlegte Phasendrahtabschnitte oder von sich windschief kreuzenden Phasendrahtabschnitten möglich sind. Durch einen schraubenartigen Verlauf (schraubenförmiger Abschnitt (19)) eines Teils der Drahtführungskonturen (12) ist es möglich die axiale Lage des Wicklungsdrahtes um eine Konturstufe zu verschieben und eine kompakte Struktur zu erreichen.

Weiterbildungen der Erfindung werden in den Unteransprüchen dargestellt. Eine sichere Trennung von Phasendrahtabschnitten ist gegeben, wenn jeder Phasendrahtabschnitt (7) in einer eigenen Drahtführungskontur (12) geführt ist. Diese sind durch eine Wandung voneinander getrennt und garantieren auch bei einer fehlerhaften Drahtisolierung einen kurzschlussfreien Betrieb.

Je nach Erfordernis kann die Drahtführungskontur (12) auch unterbrochen sein, ohne den Schutzbereich der Erfindung zu verlassen. Dies betrifft insbesondere eine äußere distale Drahtführungskontur an deren Ende ein Phasendrahtabschnitt radial nach innen zu einem Statorpol geführt wird.

Es ist vorgesehen, dass die Wicklungsdrähte (6) stets unter mechanischer Zugspannung stehen. Dies wird einerseits durch die Geometrie der Drahtführungskonturen bewirkt, welche einen im Wesentlichen kreisförmigen Verlauf haben als auch durch eine definierte Kraft mit der der Wicklungsdraht beim Bewicklungsvorgang unter Zug gehalten wird. Bereiche mit Freisparungen um den Wicklungsdraht (6) sind dabei zu vermeiden. Im optimalen Fall verlaufen die Phasendrahtabschnitte (7) spielfrei in den Drahtführungskonturen (12). Auf diese Weise kann es nicht zu Schwingungen und infolge dessen zu Drahtbrüchen kommen.

An verschiedenen Stellen um den Drahtführungsbereich (10) kann es notwendig sein von der Kreisform der Drahtführungskonturen abzuweichen. Dies ist oft notwendig in Kreuzungsbereichen oder an Stellen wo andere technische Hindernisse ein Ausweichen des Drahts erforderlich machen.

Um den Drahtzug dennoch möglichst aufrecht zu erhalten ist vorgesehen die Abweichung in Form einer Kreissehne, möglichst mit kontinuierlichen Übergängen zwischen dem Kreisabschnitt und dem Sehnenabschnitt. Alternativ kann statt eines Sehnenabschnitts ein weiterer Kreisabschnitt, mit gegenüber dem Umfangskreis deutlich größeren Radius vorgesehen sein. Hierbei bleibt der Drahtzug weitgehend erhalten.

Besonders vorteilhaft sind die genannten Abweichungen von der Kreisform in Bereichen in denen ein axial verlaufender Phasendrahtabschnitt (9) einen in Umfangsrichtung verlaufenden Phasendrahtabschnitt (7) einer anderen Phase radial außerhalb windschief passiert. Bei einer an den Drahtdurchmesser optimal angepasste Drahtführungskontur (12) lassen sich hiermit Kurzschlüsse sicher vermeiden.

Vorzugsweise ist vorgesehen, dass alle axial verlaufende Phasendrahtabschnitte (9) einen in Umfangsrichtung verlaufenden Phasendrahtabschnitt (7) einer anderen Phase radial außerhalb windschief passieren. Dies ist erforderlich, wenn die Phasendrahtabschnitte (7) zwischen den Spulen der ersten Wicklungsphase in einer ersten Drahtführungskontur (12) verlegt werden, die sich am äußeren vom Stator abgewandten axialen Ende des Drahtführungsbereichs (10) befindet, die zweiten Phasendrahtabschnitte in einer benachbarten mittleren Drahtführungskontur und die dritten Phasendrahtabschnitte in einer statornahen Drahtführungskontur.

Für den Wicklungsvorgang ist vorgesehen, dass der Isolierstoffkörper (5) radial vorspringende bleibende, abtrennbare oder umlegbare Umlenkmittel (11, 15) aufweist. Bleibende Umlenkmittel sind dann vorzusehen, wenn ausreichend Bauraum zur Verfügung gestellt werden kann. Bei einer kompakteren Bauweise können die Umlenkmittel nach der Bewicklung je nach geometrischer Auslegung abgetrennt oder umgelegt/umgebogen werden. Dies erfordert in der Regel einen zusätzlichen Verfahrensschritt, sofern das Umbiegen nicht bei der Montage eines Gehäuses erfolgt.

Dabei ist vorgesehen, dass ein in Umfangsrichtung verlegter Phasendrahtabschnitt (7) an einem Umlenkmittel (11) in eine Axialrichtung geführt ist und zumindest eine axial anschließende Drahtführungskontur (12) quert, welche an dieser Stelle einen von der Kreisform abweichenden Abschnitt (13) aufweist. Der in Axialrichtung geführte Phasendrahtabschnitt (9) entfernt sich dabei vom Stator (1). Auf diese Weise weicht stets der in Umfangsrichtung verlaufende Phasendrahtabschnitt (7) einer Berührung mit einem axial verlaufenden Phasendrahtabschnitt (9) aus. Darüber hinaus muss der axial verlaufende Phasendrahtabschnitt (9) über eine Wandung (22) zwischen den Drahtführungsabschnitten (12) geführt werden, welche keine Vertiefung aufweist. Es ist auch denkbar, dass zur Vermeidung einer Durchmesservergrößerung auch der axial verlaufende Phasendrahtabschnitt (9) in die Wandung zwischen den Drahtführungsabschnitten eingesenkt wird. In diesem Fall müsste die Abweichung von der Kreisform der benachbarten Drahtführungskontur (12) entsprechend deutlicher ausgeführt sein, um einen ausreichenden Abstand zwischen den verschiedenen Phasendrahtabschnitten (7, 9) zu gewährleisten.

Eine Besonderheit dieser Erfindung ist es, dass zumindest ein Teil der Drahtumlenkmittel (11) zwischen zwei Drahtführungskonturen (12) radial vorspringen. Auf diese Weise können die Phasendrahtabschnitte flexibler verlegt werden, so dass es auch vereinfacht möglich ist mit einem einzigen Wicklungsdraht den kompletten Stator durchgängig zu bewickeln.

Da die Drahtführungskonturen (12) eng beieinander liegen, sind die zwischen den Drahtführungskonturen (12) radial vorspringenden Drahtumlenkmittel (11) radiale Erweiterungen von Wandungen (22) zwischen den Drahtführungskonturen (12).

Damit die Phasendrahtabschnitte in die Drahtführungskonturen verlegt werden können ist es sinnvoll, dass die Drahtumlenkmittel (11) flach, wie die Wandungen (22), ausgebildet sind.

Bei der erfindungsgemäßen Ausgestaltung des Isolierstoffkörpers ist es nicht erforderlich, dass die Drahtführungskonturen (12) in ihrem Verlauf schlitzartige Drahtdurchführungen durch den Drahtführungsbereich (10) aufweisen. Dadurch lässt sich der Drahtführungsbereich stabiler ausgestalten und es lässt sich ein höherer Drahtzug erreichen.

Es kann erforderlich sein, dass der Isolierstoffkörper (5) Zentrierkonturen (14) aufweist, die mit entsprechenden Konturen des Stators und/oder eines Gehäuses korrespondieren, wobei die Zentrierkonturen (14) die Form einer Einbuchtung haben. Diese Zentrierkonturen halten den Stator in Bezug auf ein Gehäuse zentriert oder bewirken eine Verdrehsicherung oder dienen der besseren Lagezuordnung. Auch an derartigen Zentrierkonturen darf die Isolierung der Phasendrahtabschnitte nicht verletzt werden deshalb ist auch hier vorgesehen, dass die Drahtführungskonturen (12) im Bereich der Zentrierkonturen (14) eine Vertiefung aufweisen, deren Tiefe so bemessen ist, dass ein Phasendrahtabschnitt (7) darin vollständig aufgenommen werden kann, ohne in den Bereich der Zentrierkonturen (14) zu ragen.

Je nach Bauraumerfordernis können unterschiedliche Ausgestaltungen des Isolierstoffkörpers sinnvoll sein. Sofern der Durchmesser des Stators und damit des Gleichstrommotors gering gehalten werden soll ist es sinnvoll, dass der ringförmige Drahtführungsbereich (10) den Isolierstoffkörper (5) axial verlängert.

Ist der axiale Bauraum begrenzt kann der ringförmige Drahtführungsbereich den Isolierstoffkörper (5) auch radial erweitern.

Die Anschlussvorsprünge (34, 35, 36, 37) schließen jeweils axial an den Drahtführungsbereich an. Diese sind so ausgestaltet, dass sie schachtartige Gehäusekonturen zur Aufnahme eines Schneidklemmkontakts aufweist, wobei schlitzartige radiale Vertiefungen (16) in der Schachtwand zur Aufnahme eines radialen Phasendrahtabschnitts (8) vorgesehen sind.

Zweckmäßigerweise ist vorgesehen, dass axial an den Drahtführungsbereich (10) anschließende und mit dem Isolierstoffkörper (5) einstückige Begrenzungsmittel (25) vorhanden sind, die ein Verschieben oder Ausweichen der radialen Phasendrahtabschnitte (8) in Umfangsrichtung verhindern. Dadurch werden die Bewegungsfreiheitsgrade für den Draht eingeschränkt und die Schwingneigung deutlich verringert.

Aus konstruktionstechnischen Gründen ist es sinnvoll, dass eine Drahtführungskontur (12) in einem Endbereich eine Auslaufkontur (17) aufweist, wodurch die Drahtführungskontur (12) stufenlos in einen führungsfreien Abschnitt (18) des Drahtführungsbereichs (10) übergeht. Vor der Auslaufkontur sind die flachen Umlenkmittel (11) vorgesehen, welche eine Drahtumlenkung erleichtern. Anschließend endet die Drahtführungskontur (12) und geht in die Auslaufkontur (17) über. Die Umlenkmittel (11) für die Phasendrahtabschnitte (8) können nach dem Bewickeln entfernt werden, da sich der Wicklungsdraht infolge des Drahtzuges nicht mehr aus den Drahtführungskonturen herausbewegen kann.

Bei vielen Anwendungen, wie bei elektrischen Ölpumpen, befindet sich nahe der Wicklungsverschaltung eine Leiterplatte zur elektrischen Ansteuerung des Motors. Zur Optimierung des Leiterplattenlayouts ist es vorteilhaft, dass die Phasenanschlüsse nahe beieinander liegen, vorzugsweise in einem Winkelbereich von maximal 120°.

Der Stator und ein Elektromotor mit diesem Stator sind vorzugsweise für eine Bordnetz-Spannung von 48V ausgelegt, mit einem Spannungsbereich von 24V bis 60V oder 36V bis 60V oder 40V bis 60V.

Der Stator ist für eine Bordnetz-Spannung von 36V, mit einem Spannungsbereich von 24V bis 48V oder für eine Bordnetz-Spannung von 110V, mit einem Spannungsbereich von 90V bis 150V ausgelegt.

Weiter ist vorgesehen, dass die Energie zur Bestromung des Stators durch eine Gleichstromquelle, durch eine Wechselstromquelle, durch eine Drehstromquelle oder durch einen gepulsten Gleichstrom geliefert wird.

Der Stator hat einen Durchmesser im Bereich zwischen 40 und 80mm oder zwischen 40 und 160mm oder zwischen 40 und 200mm.

Schließlich sind der Stator und ein Elektromotor mit diesem Stator für einen Leistungsbereich zwischen 300W und 2kW oder zwischen 300W und 4kW oder zwischen 300W und 6kW ausgelegt.

Im Übrigen wird ein Elektromotor mit einem Stator gemäß einem der vorangehenden Ansprüche beansprucht.

Ausführungsbeispiele der Erfindung werden nachfolgend anhand der Zeichnung näher erläutert. Es zeigen:
- Fig. 1: einen Stator aus dem Stand der Technik,
- Fig. 2: eine erste Ausführungsform eines erfindungsgemäßen Stators,
- Fig. 3: eine Seitenansicht eines Isolierstoffkörpers mit Drahtverlegungen,
- Fig. 4: eine Einzelheit des Isolierstoffkörpers mit sich kreuzenden Drahtzuführungen,
- Fig. 5: den Stator mit einer ersten Phase bewickelt,
- Fig. 6: den Stator mit der ersten und einer zweiten Phase bewickelt,
- Fig. 7: den Stator mit der ersten, der zweiten und einer dritten Phase bewickelt,
- Fig. 8: eine weitere Einzelheit mit Umlenkmitteln,
- Fig. 9: eine Teilansicht des Isolierstoffkörpers mit Umlenkmitteln,
- Fig. 10: eine zweite Ausführungsform des erfindungsgemäßen Stators mit einem Sternpunktkontakt und
- Fig. 11: ein Wickelschema der drei Phasen.

Hinweis: Bezugszeichen mit Index und entsprechende Bezugszeichen ohne Index bezeichnen namensgleiche Einzelheiten in den Zeichnungen und der Zeichnungsbeschreibung. Die Ansprüche, die Beschreibungseinleitung, die Bezugszeichenliste und die Zusammenfassung enthalten der Einfachheit halber nur Bezugszeichen ohne Index.

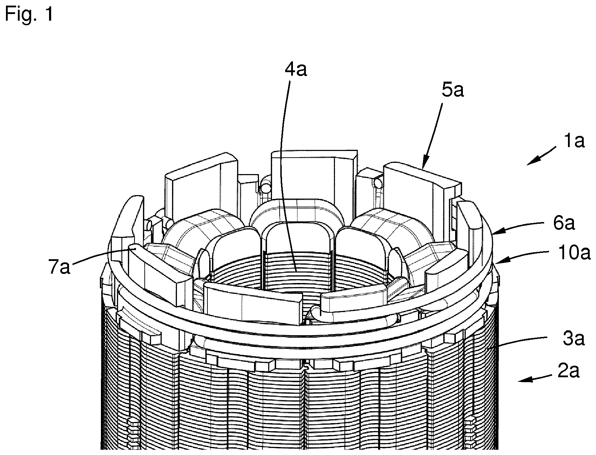

Fig. 1 zeigt einen Stator 1a aus dem Stand der Technik, mit einem einen Rückschlussring 3a und Statorpolen 4a aufweisenden Statorkern 2a, einem Isolierstoffkörper 5a und einem Wicklungsdraht 6a. Der Isolierstoffkörper 5a umfasst zwar einen Drahtführungsbereich 10a, dieser weist aber keine ausreichenden Drahtführungskonturen auf. Die bis zu vier parallel verlaufenden Verbindungsdrähte zwischen den Phasen (Phasendrahtabschnitte 7a) können sich berühren. Hier handelt es sich um den Stator eines 12V-Motors, bei welchem der Drahtdurchmesser relativ groß ist. Dementsprechend ist auch die Drahtisolierung relativ dickwandig und reicht in der Regel aus. Drahtkreuzungen werden vermieden, indem der Drahtführungsbereich 10a vielfach durch Schlitze unterbrochen ist. Dadurch muss die Wandstärke entsprechend vergrößert werden, um eine ausreichende Stabilität zu erreichen.

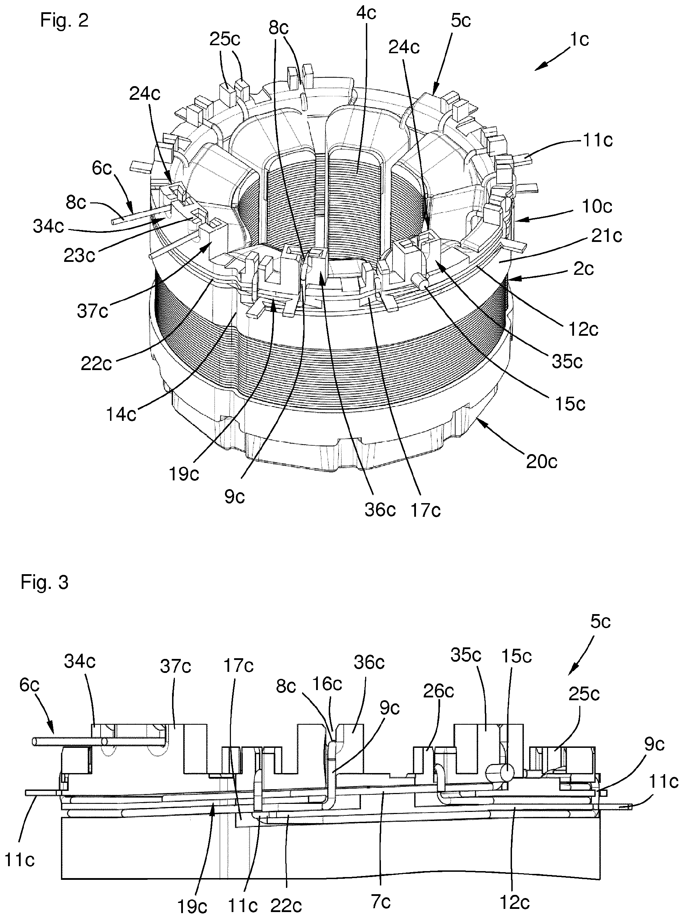

Fig. 2 zeigt eine räumliche Darstellung einer ersten Ausführungsform des erfindungsgemäßen Stators 1c, mit einem Rückschlussring 2c, radial nach innen ragende Statorpole 4c, einem Isolierstoffkörper 5c, ein Wicklungsdraht 6c und eine Isolierkappe 20c ohne Drahtführungsfunktion. Der Isolierstoffkörper 5c weist einen über den Rückschlussring 2c geschobenen Außenring 21c, einen daran axial anschließenden Drahtführungsbereich 10c und daran axial anschließende Anschlussvorsprünge 34c, 35c, 36c, 37c auf. Der Drahtführungsbereich 10c weist Drahtführungskonturen 12c in Form von in den Drahtführungsbereich 10c eingeformten Rillen, welche durch Wandungen 22c voneinander getrennt sind. Die Anschlussvorsprünge 34c, 35c, 36c, 37c weisen Schachtwände 23c auf, die jeweils einen Aufnahmeschacht 24c für einen Schneidklemmkontakt bilden. Jeweils zwei Schachtwände 23c der Anschlussvorsprünge 34c, 35c, 36c, 37c haben schlitzartige Vertiefungen 16c, welche zur Aufnahme von radialen verlegten Phasendrahtabschnitten 8c dienen. Axial schließen an den Drahtführungsbereich 10c mit dem Isolierstoffkörper 5c einstückige Begrenzungsmittel 25c an, die ein Verschieben oder Ausweichen von radialen Phasendrahtabschnitte 8c, welche nicht in eine der schlitzartigen Vertiefungen 16c, sondern zu einer Spule eines Statorpols 4c führen. Damit beim Wickelvorgang, insbesondere beim Verlegen des Umfangsdrahtabschnitts 7c um 90° in eine axiale Richtung (axialer Phasendrahtabschnitt 9c) der Wicklungsdraht sicher verlegt werden kann sind flache Umlenkmittel 11c und zylindrische Umlenkmittel 15c vorgesehen. Sind die Umlenkmittel 11c zwischen zwei Drahtführungskonturen 12c angeordnet, sind diese flach wie die Wandung 22c und als Erweiterung derselben ausgebildet. Die flache Geometrie ist erforderlich, um den Phasendrahtabschnitt 7c in die Drahtführungskontur 12 verlegen zu können. Zylinderförmige Umlenkmittel 15c können breiter als die Wandung 22c ausgebildet sein, wenn sie am axial äußeren Ende des Drahtführungsbereichs 10c angeordnet sind. Weiter ist ein schraubenförmiger Abschnitt 19c von Drahtführungskonturen 12 zu erkennen.

Fig. 3 zeigt eine Seitenansicht des Isolierstoffkörpers 5c gemäß Fig. 2 mit darauf verlegten Wicklungsdraht 6c, insbesondere Phasendrahtabschnitte 7c. In einem Abschnitt 19c ist hier deutlicher als in Fig. 2 ein schraubenförmiger Verlauf von Drahtführungskonturen 12c zu erkennen, welcher in einem Übergangsbereich von einer ersten in eine zweite Phase, sowie von einer zweiten in eine dritte Phase vorgesehen ist. Weiter sind die Drahtführungskonturen 12c, die Wandungen 22c zwischen den Drahtführungskonturen 12c, die radial angeordnete flache Umlenkmittel 11c, zylindrische Umlenkmittel 15c, die axial angeordneten Begrenzungsmittel 25c und die axial angeordnete Anschlussvorsprünge 16c zu erkennen zu welchem der axial verlaufende Phasendrahtabschnitt 9c führt und in welchem der radial verlaufende Phasendrahtabschnitt 8c in der schlitzartigen Vertiefung 16c liegt. Es sind zwei einzelne Anschlussvorsprünge 35c, 36c vorhanden und ein doppelter Anschlussvorsprung 34c, 37c, welcher den Anfang und das Ende des Wicklungsdrahtes 6c aufnimmt. Die Begrenzungsmittel 25c weisen schräge Einführbereiche 26c auf.

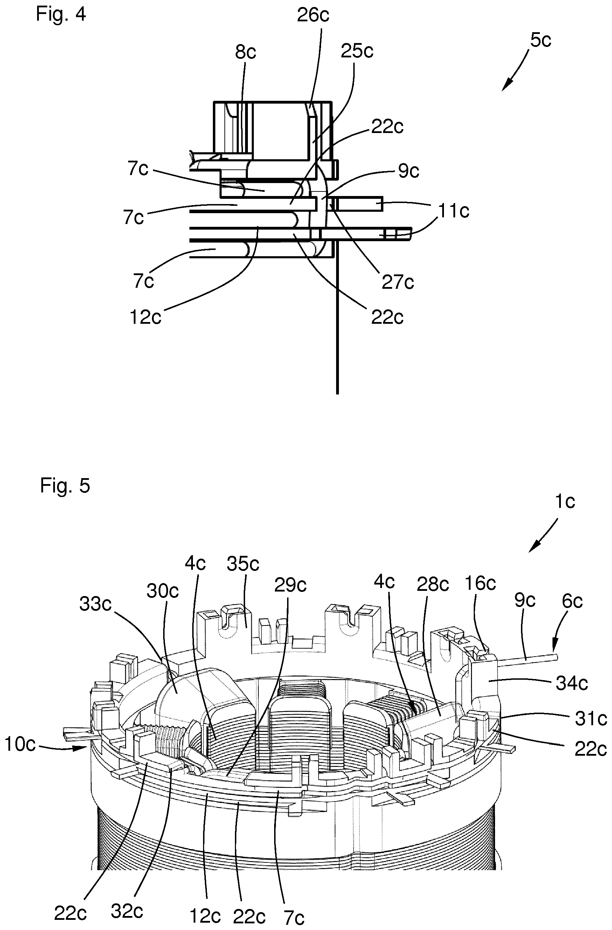

Fig. 4 zeigt eine Einzelheit des Isolierstoffkörpers 5c, mit den Drahtführungskonturen 12c den Wandungen 22c, den flachen Umlenkmitteln 11c, den Begrenzungsmitteln 25c, mit den schrägen Einführbereichen 26c, den auf einem Umfangskreis verlaufenden Phasendrahtabschnitten 7c, den axial verlaufenden Phasendrahtabschnitten 9c und den radial verlaufenden Phasendrahtabschnitten 8c. Deutlich ist die schmale Kontur der flachen Umlenkmittel 11c zu erkennen, die eine radiale Erweiterung der Wandungen 12c darstellen. Die Drahtführungskonturen 12c sind rillenartige Vertiefungen am Außenumfang des Isolierstoffkörpers 5c. In den Winkelsektoren, in denen sich die axial verlaufenden Phasendrahtabschnitte windschief kreuzen sind die Drahtführungskonturen kreissehnenartig vertieft, um einen sicheren Abstand vom kreuzenden Phasendrahtabschnitt zu erreichen. Damit letzterer keine radiale Durchmesservergrößerung bewirkt ist auch eine Wandung 22c mit einer Aussparung 27c versehen. Die Aussparung 27c und die Vertiefung der Drahtführungskontur sind so aufeinander abgestimmt, dass stets ein ausreichender Abstand zwischen den sich kreuzenden Phasendrahtabschnitten gewährleistet ist.

Fig. 5 zeigt den mit einer ersten Phase bewickelten Stator 1c. Der Stator 1c weist neun Pole auf, wobei jeweils drei Pole zu einer Phase gehören. Der Wicklungsdraht 6c verläuft durch die schlitzartige Vertiefung 16c des ersten Anschlussvorsprungs 34c radial nach innen zu einem ersten Statorpol 4c, bildet dort die erste Spule 28c und wird radial nach außen durch eine erste Freisparung 31c in der äußeren Wandung 22c in die erste Drahtführungskontur 12c geführt. Die Freisparung 31c erstreckt sich auch axial durch den Drahtführungsbereich 10c. Da an der ersten Freisparung 31c der Wicklungsdraht 6c nicht ausweichen kann ist kein zusätzliches Umlenkmittel erforderlich. Von der Drahtführungskontur 12c wird der Wicklungsdraht 6c an einem ersten Rand einer zweiten Freisparung 32c zu einem weiteren Statorpol geführt und bildet dort die zweite Spule 29c. Von der zweiten Spule 29c wird der Wicklungsdraht 6c radial an einem zweiten Rand der zweiten Freisparung 32c nach außen und dann wieder in die äußere Drahtführungskontur 12 bis zu einer dritten Freisparung 33c geführt. Der Wicklungsdraht 6c verläuft durch die dritte Freisparung 33c radial nach innen zu einem weiteren Statorpol und bildet dort die dritte Spule 30c. Von der dritten Spule 30c wird der Wicklungsdraht 6c axial zu dem zweiten Anschlussvorsprung 35c geführt (in Fig. 5 nicht dargestellt). Damit ist die erste Phase des Wicklungsdrahtes 6c verlegt.

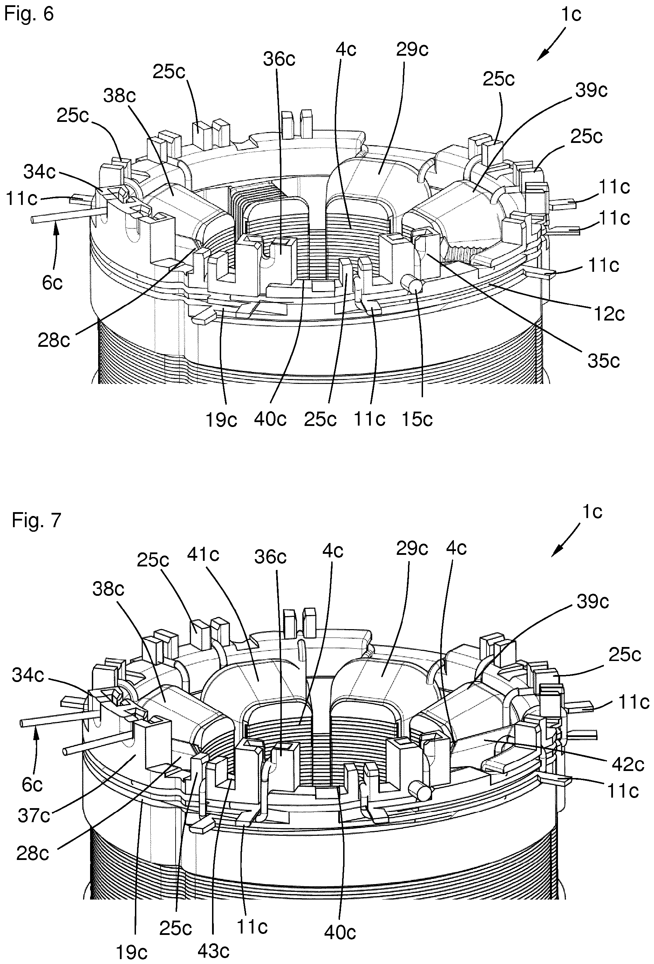

Fig. 6 zeigt den mit der ersten und der zweiten Phase bewickelten Stator 1c. Am zweiten Anschlussvorsprung 35c ist der Übergang von der ersten auf die zweite Phase. Vom zweiten Anschlussvorsprung 35c aus verläuft der Wicklungsdraht 6c kurz axial bis zu einem zylinderförmigen Umlenkmittel 15c und von dort um ca. 90° gebogen in den schraubenförmigen Abschnitt 19 der Drahtführungskontur 12c. Hierdurch wird die bereits belegte axial äußere Drahtführungskontur 12c umgangen. Der schraubenförmige Abschnitt 19c geht in einen zum Phasendrahtabschnitt 7c der ersten Phase parallele Drahtführungskontur 12c über (hier nicht zu erkennen). An einem flachen Umlenkmittel 11c wird der Wicklungsdraht 6c rechtwinklig abgebogen, axial und dann über die äußere Wandung 22c radial zwischen zwei Begrenzungsmitteln 25c zu einem weiteren Statorpol geführt. Dort bildet der Wicklungsdraht 6c die vierte Spule 38c. Von dort verläuft der Wicklungsdraht 6c wieder durch zwei Begrenzungsmittel 25c zurück zur zweiten Drahtführungskontur 12c (verdeckt) und von dort auf die gleiche Weise weiter durch weitere Begrenzungsmittel 25c zu einem Statorpol 4c. Dort bildet der Wicklungsdraht 6c eine fünfte Spule 39c. Von der fünften Spule verläuft der Wicklungsdraht 6c durch weitere Begrenzungsmittel 25c wieder nach außen in die zweite Drahtführungskontur 12c (teilweise verdeckt) um ein flaches Umlenkmittel 11c und anschließend weiter in der zweiten Drahtführungskontur 12c. Auf die gleiche Weise wird eine sechste Spule 40c gebildet. Von dort wird die zweite Phase mit der Durchführung durch den dritten Anschlussvorsprung 36c abgeschlossen (hier nicht dargestellt).

Fig. 7 zeigt den mit drei Phasen vollständig bewickelten Stator 1c. Vom dritten Anschlussvorsprung 39c verläuft der Wicklungsdraht 6c an einem flachen Umlenkmittel 11c vorbei in einen zweiten schraubenförmigen Abschnitt 19c der Drahtführungskontur 12c, vorbei an der ersten Spule 28c und der vierten Spule 38c, um eine Umlenkmittel 11c (verdeckt) und durch Begrenzungsmittel 25c zu einem weiteren Statorpol 4c zur Bildung einer siebten Spule 41c. Von der siebten Spule 41c verläuft der Wicklungsdraht 6c radial nach außen und über eine dritte in Umfangsrichtung verlaufende Drahtführungskontur 12c bis zu einem flachen Umlenkmittel 11c und durch Begrenzungsmittel 25c nach innen zu einem weiteren Statorpol 4c und bildet dort die achte Spule 42c. Von der achten Spule 42c verläuft der Wicklungsdraht 6c weiter radial nach außen um ein flaches Umlenkmittel 11c herum über die dritte Drahtführungskontur dann um ein weiteres flaches Umlenkmittel 11c herum zu einem weiteren Statorpol und bildet dort eine neunte Spule 43c. Von der neunten Spule 43c verläuft der Wicklungsdraht 6c direkt zu einem vierten Anschlussvorsprung 37c, der zusammen mit dem ersten Anschlussvorsprung 34c einen doppelten Anschlussvorsprung bildet. Im vorliegenden Beispiel ist der Stator im Dreieck verschaltet, daher wird der Spulenanfang mit dem Spulenende verschaltet.

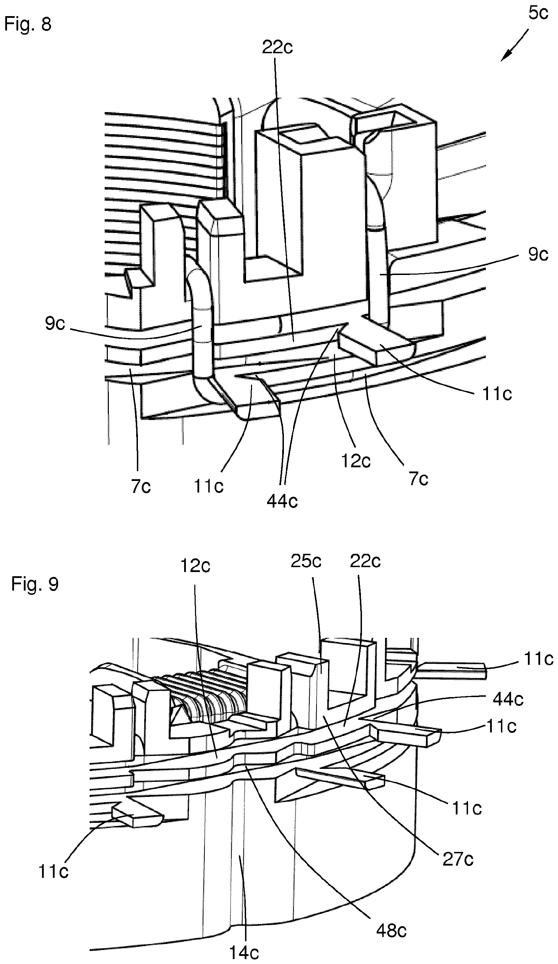

Fig. 8 zeigt eine weitere Einzelheit des Isolierstoffkörpers 5c, mit den Drahtführungskonturen 12c, den Wandungen 22c, den flachen Umlenkmitteln 11c, dem entlang eines Kreisumfanges verlaufenden Phasendrahtabschnitts 7c, dem axial verlaufenden Phasendrahtabschnitt 9c und Sollbruchstellen 44c. Die Sollbruchstellen sind kerbenförmig ausgebildet, damit die flachen Umlenkmittel 11c einfach entfernt werden können.

Fig. 9 zeigt eine Teilansicht des Isolierstoffkörpers 5c mit den Umlenkmitteln 11c, den Drahtführungskonturen 12c, den Wandungen 22c, einer Zentrierkontur 14c, sehnenartigen Vertiefungen 48c, den Aussparungen 27c, den Sollbruchstellen 44 c und den Begrenzungsmitteln 25c. Die sehnenartigen Vertiefungen 48c dienen an dieser Stelle dazu die Phasendrahtabschnitte um dem Raumbereich von Zentriermitteln herumzulegen. Die Zentrierkontur 14c setzt sich auch im Bereich der Wandungen 22c fort.

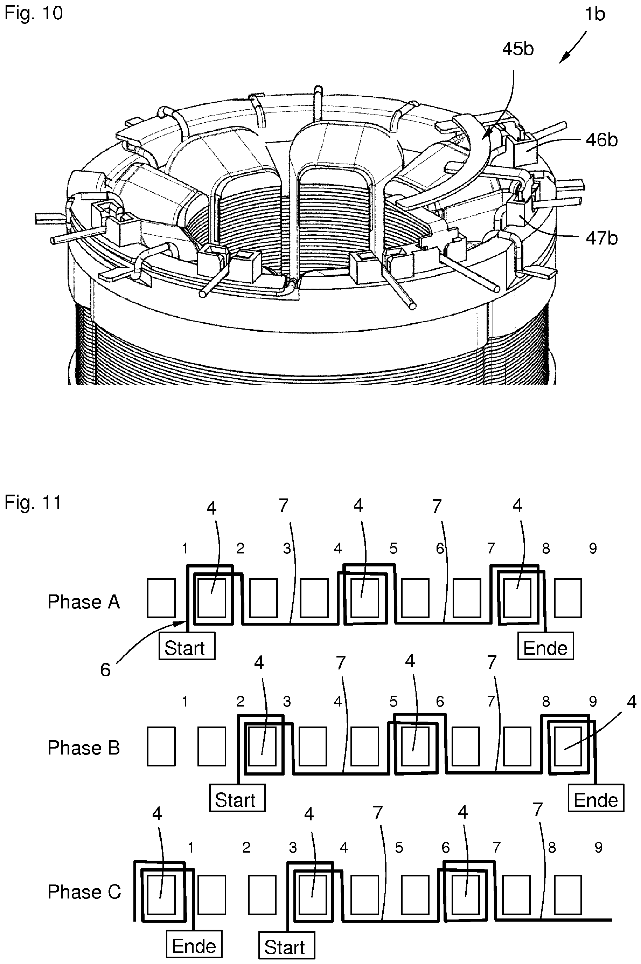

Fig. 10 zeigt einen bewickelten Stator 1b mit einem Sternpunktkontakt 45b. Hierfür sind zwei zusätzliche Anschlussvorsprünge 46b und 47b vorhanden, um die drei Phasen an einem Sternpunkt miteinander zu verbinden. Im Übrigen sind der Aufbau und die Bewicklung des Stators ähnlich wie bei einem Stator mit Dreieckschaltung.

Fig. 11 zeigt ein Wickelschema für die drei Phasen A, B, C des Stators. Der Gesamte Stator wird mit einem einzigen Wicklungsdraht 6 bewickelt, beginnend mit Phase A durch Umwickeln eines ersten Statorpols 4, Weiterführung des Wicklungsdrahtes durch Phasendrahtabschnitte 7 an zwei unbewickelten Statorpolen vorbei zu einem zweiten Statorpol 4 der Phase A und in gleicher Weise zu einem dritten Statorpol. Phase B startet mit einem Pol Versatz zum Startpunkt der ersten Phase und wird in gleicher Weise wie bei Phase A fortgesetzt. Phase C startet um einen Statorpol versetzt zum Startpunkt der Phase B und wird analog zu den Phasen A und B bewickelt. Der Endpunkt von Phase C stimmt mit dem Startpunkt von Phase A überein, wodurch sich eine Dreieckschaltung ergibt.

### Bezugszeichenliste

- 1: Stator
- 2: Statorkern
- 3: Rückschlussring
- 4: Statorpol
- 5: Isolierstoffkörper
- 6: Wicklungsdraht
- 7: Phasendrahtabschnitt
- 8: radialer Phasendrahtabschnitt
- 9: axialer Phasendrahtabschnitt
- 10: Drahtführungsbereich
- 11: flaches Umlenkmittel
- 12: Drahtführungskontur
- 13: abweichender Abschnitt
- 14: Zentrierkontur
- 15: zylinderförmiges Umlenkmittel
- 16: schlitzartige Vertiefung
- 17: Auslaufkontur
- 18: führungsfreier Abschnitt
- 19: schraubenförmiger Abschnitt
- 20: Isolierkappe
- 21: Außenring
- 22: Wandung
- 23: Schachtwand
- 24: Aufnahmeschacht
- 25: Begrenzungsmittel
- 26: Einführbereich
- 27: Aussparung
- 28: erste Spule
- 29: zweite Spule
- 30: dritte Spule
- 31: erste Freisparung
- 32: zweite Freisparung
- 33: dritte Freisparung
- 34: erster Anschlussvorsprung
- 35: zweiter Anschlussvorsprung
- 36: dritter Anschlussvorsprung
- 37: vierter Anschlussvorsprung
- 38: vierte Spule
- 39: fünfte Spule
- 40: sechste Spule
- 41: siebte Spule
- 42: achte Spule
- 43: neunte Spule
- 44: Sollbruchstelle
- 45: Sternpunkkontakt
- 46: fünfter Anschlussvorsprung
- 47: sechster Anschlussvorsprung
- 48: sehnenartige Vertiefung

## Patentansprüche

1. Stator (1) eines dreiphasigen elektronisch kommutierten Gleichstrommotors, mit einem Statorkern (2), einem Isolierstoffkörper (5) und einem Wicklungsdraht (6), wobei der Statorkern (2) einen geschlossenen Rückschlussring (3) und eine Mehrzahl von radial vom Rückschlussring (3) nach innen weisende Statorpole (4) aufweist, der Isolierstoffkörper (5) axial an den Statorkern (2) anschließt, sowohl den Rückschlussring (3) als auch die Statorpole (4) bedeckt, einen ringförmigen Drahtführungsbereich (10) mit radial nach außen offenen, im Wesentlichen entlang einer Kreisform und teilweise schraubenförmig (schraubenförmiger Abschnitt 19) verlaufende Drahtführungskonturen (12) sowie mehrere Anschlussvorsprünge (34, 35, 36, 37) aufweist, und der Wicklungsdraht (6) um die einzelnen Statorpole (4) gewickelt ist und je Phase einen Phasendrahtabschnitt (7) aufweist, wobei zwischen bewickelten Statorpolen (4) verlaufende Phasendrahtabschnitte (7) durch die Drahtführungskonturen (12) derart voneinander auf Abstand gehalten werden, dass keine Berührung von parallel verlaufenden und sich windschief kreuzenden Phasendrahtabschnitten (7) unterschiedlicher Phasen auftritt.

2. Stator nach Anspruch 1, **dadurch gekennzeichnet, dass** jeder Phasendrahtabschnitt (7) in einer eigenen Drahtführungskontur (12) geführt ist.

3. Stator nach Anspruch 2, **dadurch gekennzeichnet, dass** zumindest eine der Drahtführungskonturen (12) abschnittsweise unterbrochen ist.

4. Stator nach Anspruch 1, 2 oder 3, **dadurch gekennzeichnet, dass** die Wicklungsdrähte (6) stets unter mechanischer Zugspannung stehen.

5. Stator nach Anspruch 1, 2, 3 oder 4, **dadurch gekennzeichnet, dass** eine Drahtführungskontur (12) einen von der Kreisform abweichenden Abschnitt (13) aufweist.

6. Stator nach Anspruch 5, **dadurch gekennzeichnet, dass** die Abweichung von der Kreisform sehnenartig oder bogenförmig ist, wobei der Radius der Bogenform größer ist als der Radius der Kreisform.

7. Stator nach Anspruch 5 oder 6, **dadurch gekennzeichnet, dass** ein axial verlaufender Phasendrahtabschnitt (9) einen in Umfangsrichtung verlaufenden Phasendrahtabschnitt (7) einer anderen Phase radial außerhalb windschief passiert.

8. Stator nach Anspruch 7, **dadurch gekennzeichnet, dass** alle axial verlaufenden Phasendrahtabschnitte (9) einen in Umfangsrichtung verlaufenden Phasendrahtabschnitt (7) einer anderen Phase radial außerhalb windschief passieren.

9. Stator nach zumindest einem der vorangehenden Ansprüche, **dadurch gekennzeichnet, dass** der Isolierstoffkörper (5) radial vorspringende bleibende, abtrennbare oder umlegbare Umlenkmittel (11, 15) aufweist.

10. Stator nach Anspruch 9, **dadurch gekennzeichnet, dass** ein in Umfangsrichtung verlegter Phasendrahtabschnitt (7) an einem Umlenkmittel (11) in eine Axialrichtung geführt ist und zumindest eine axial anschließende Drahtführungskontur (12) quert, welche an dieser Stelle einen von der Kreisform abweichenden Abschnitt (13) aufweist.

11. Stator nach Anspruch 10, **dadurch gekennzeichnet, dass** zumindest ein Teil der Drahtumlenkmittel (11) zwischen zwei Drahtführungskonturen (12) radial vorspringen.

12. Stator nach Anspruch 11, **dadurch gekennzeichnet, dass** die zwischen den Drahtführungskonturen (12) radial vorspringenden Drahtumlenkmittel (11) radiale Erweiterungen von Wandungen (22) zwischen den Drahtführungskonturen (12) sind.

13. Stator nach Anspruch 12, **dadurch gekennzeichnet, dass** die Drahtumlenkmittel (11) flach wie die Wandungen (22) ausgebildet sind.

14. Stator nach zumindest einem der vorangehenden Ansprüche, **dadurch gekennzeichnet, dass** die Drahtführungskonturen (12) in ihrem Verlauf keine Drahtdurchführungen durch den Drahtführungsbereich (10) aufweisen.

15. Stator nach zumindest einem der vorangehenden Ansprüche, **dadurch gekennzeichnet, dass** der Isolierstoffkörper (5) Zentrierkonturen (14) aufweist, die mit entsprechenden Konturen des Stators und/oder eines Gehäuses korrespondieren, wobei die Zentrierkonturen (14) die Form einer Einbuchtung haben.

16. Stator nach Anspruch 5 oder 6 und 15, **dadurch gekennzeichnet, dass** die Drahtführungskonturen (12) im Bereich der Zentrierkonturen (14) eine Vertiefung aufweisen, deren Tiefe so bemessen ist, dass ein Phasendrahtabschnitt (7) darin vollständig aufgenommen werden kann, ohne in den Bereich der Zentrierkonturen (14) zu ragen.

17. Stator nach zumindest einem der vorangehenden Ansprüche, **dadurch gekennzeichnet, dass** der ringförmige Drahtführungsbereich (10) den Isolierstoffkörper (5) axial verlängert.

18. Stator nach zumindest einem der Ansprüche 1 bis 16, **dadurch gekennzeichnet, dass** der ringförmige Drahtführungsbereich (10) den Isolierstoffkörper (5) radial erweitert.

19. Stator nach zumindest einem der Ansprüche 1 bis 17, **dadurch gekennzeichnet, dass** die Anschlussvorsprünge (34, 35, 36, 37) axial an den Drahtführungsbereich (10) anschließen.

20. Stator nach zumindest einem der vorangehenden Ansprüche, **dadurch gekennzeichnet, dass** die Anschlussvorsprünge (34, 35, 36, 37) schachtartige Gehäusekonturen zur Aufnahme eines Schneidklemmkontakts aufweisen, wobei schlitzartige radiale Vertiefungen (16) in der Schachtwand zur Aufnahme eines radialen Phasendrahtabschnitts (8) vorgesehen ist.

21. Stator nach zumindest einem der vorangehenden Ansprüche, **dadurch gekennzeichnet, dass** axial an den Drahtführungsbereich (10) anschließende und mit dem Isolierstoffkörper (5) einstückige Begrenzungsmittel (25) vorgesehen sind, die ein Verschieben oder Ausweichen der radialen Phasendrahtabschnitte (8) in Umfangsrichtung verhindern.

22. Stator nach zumindest einem der vorangehenden Ansprüche, **dadurch gekennzeichnet, dass** eine Drahtführungskontur (12) in einem Endbereich eine Auslaufkontur (17) aufweist, wodurch die Drahtführungskontur (12) stufenlos in einen führungsfreien Abschnitt (18) des Drahtführungsbereichs (10) übergeht.

23. Stator nach zumindest einem der vorangehenden Ansprüche, **dadurch gekennzeichnet, dass** die Anschlussvorsprünge (34, 35, 36, 37) in einem Winkelsektor von maximal 120° angeordnet sind.

24. Stator nach zumindest einem der vorangehenden Ansprüche, **dadurch gekennzeichnet, dass** er vorzugsweise für eine Bordnetz-Spannung von 48V ausgelegt ist, mit einem Spannungsbereich von 24V bis 60V oder 36V bis 60V oder 40V bis 60V.

25. Stator nach zumindest einem der vorangehenden Ansprüche, **dadurch gekennzeichnet, dass** er für eine Bordnetz-Spannung von 36V oder 110V ausgelegt ist, mit einem Spannungsbereich von 24V bis 48V bzw. von 90V bis 150V.

26. Stator nach zumindest einem der vorangehenden Ansprüche, **dadurch gekennzeichnet, dass** die Energie zu seiner Bestromung durch eine Gleichstromquelle, durch eine Wechselstromquelle, durch eine Drehstromquelle oder durch einen gepulsten Gleichstrom geliefert wird.

27. Stator nach zumindest einem der vorangehenden Ansprüche, **dadurch gekennzeichnet, dass** er einen Durchmesser im Bereich zwischen 40 und 80mm oder zwischen 40 und 160mm oder zwischen 40 und 200mm hat.

28. Stator nach zumindest einem der vorangehenden Ansprüche, **dadurch gekennzeichnet, dass** er für einen Leistungsbereich zwischen 300W und 2kW oder zwischen 300W und 4kW oder zwischen 300W und 6kW ausgelegt ist.

29. Elektromotor mit einem Stator gemäß einem der vorangehenden Ansprüche.
